(19) **Europäisches Patentamt / European Patent Office / Office européen des brevets**

(11) **EP 1 204 884 B1**

(12) **FASCICULE DE BREVET EUROPEEN**

(45) Date de publication et mention
de la délivrance du brevet:
**24.02.2010 Bulletin 2010/08**

(21) Numéro de dépôt: **00958592.8**

(22) Date de dépôt: **21.07.2000**

(51) Int Cl.:
**G01S 7/00** *(2006.01)*     **G01S 15/87** *(2006.01)*

(86) Numéro de dépôt international:
**PCT/FR2000/002116**

(87) Numéro de publication internationale:
**WO 2001/009639 (08.02.2001 Gazette 2001/06)**

(54) **SYSTEME DE REPERAGE ACOUSTIQUE PAR BOUEES SOUS-MARINES**

ORTUNGSSYSTEM MITTELS SCHALLWELLEN UND UNTERWASSERBOJE

SOUND-RANGING SYSTEM WITH SUBMARINE BUOY

(84) Etats contractants désignés:
**DE FR GB**

(30) Priorité: **03.08.1999 FR 9910083**
**15.10.1999 FR 9912914**

(43) Date de publication de la demande:
**15.05.2002 Bulletin 2002/20**

(73) Titulaire: **Thales Underwater Systems SAS**
**06903 Sophia Antipolis (FR)**

(72) Inventeur: **KERVEN, Gilles,**
**Thomson-CSF Propriété Industrielle**
**94117 Arcueil Cedex (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**GB-A- 2 280 750     US-A- 5 231 609**

**Description**

La présente invention se rapporte aux systèmes qui permettent de repérer de manière acoustique à l'aide d'un ensemble de bouées sous-marines des objets immergés au sein de la mer. Elle concerne plus particulièrement les moyens de traitement des signaux de réception de ces bouées, qui sont transmis généralement par voie radio-électrique à une base de traitement le plus souvent située dans un *aéronef*.

On sait repérer des objets situés au sein de la mer, des sous-marins par exemple, en larguant des bouées acoustiques depuis un avion. Ces bouées peuvent être passives et recevoir alors simplement les signaux acoustiques émis par les cibles, ou actives et recevoir alors l'écho d'un signal acoustique qu'elles ont elles-mêmes émis. Ces signaux acoustiques reçus par les bouées font souvent l'objet d'un pré-traitement permettant par exemple de déterminer la direction du signal sonore reçu, et éventuellement sa distance quand il s'agit d'une bouée active, et le signal ainsi prétraité est transmis par voie hertzienne à l'avion largueur. Après avoir exploité les signaux ainsi transmis de manière individuelle, on a été très rapidement amené à regrouper ces traitements pour en effectuer une synthèse afin de déterminer de manière plus précise les caractéristiques de la cible ainsi détectée.

On a ainsi décrit dans un brevet français déposé le 13 Mars 1992 au nom de THOMSON-CSF sous le n° 92 03005 et publié le 17 Septembre **1993 sous le n°**2 688 595**,** un système de traitement permettant d'effectuer un tel repérage à l'aide d'un réseau de bouées passives du type connu sous le nom « DIFAR ».

On peut aussi utiliser des bouées comportant des sonars actifs telles que celles .décrites dans le brevet américain 3, 444, 508 délivré le 13 Mai 1969 au nom de Ernest A. Granfors et Cie. Chaque bouée est dotée d'un code propre qui est placé dans le signal radio émis vers l'aéronef largueur. On peut ainsi les identifier de manière sûre et déterminer leur position par goniométrie à partir de cet avion. Ces bouées étant actives, elles émettent chacune un signal acoustique codé par rapport à celui des autres bouées de manière à pouvoir les distinguer à la réception Chaque bouée reçoit les signaux émis par les autres bouées. On obtient ainsi un réseau formant un grand sonar réparti fonctionnant en multistatique et que l'on pourrait qualifier de « macm-sonar ».

Ce multistatisme permet entre autres de localiser plus précisément la cible, de déterminer sa vitesse et d'accroître la probabilité de détection de celle-ci ainsi que l'étendue de la zone couverte par l'ensemble des bouées.

A chaque récurrence d'émission du groupe de bouées sélectionnées pour couvrir une zone déterminée, on obtient une image, ou une carte, de cette zone. Cette technique est connue dans l'art sous le terme de AGP correspondant à l'expression anglo-saxonne « Active Geographic Plot ». Cette image donne en fait une représentation géographique de la position de la cible, annotée d'une estimation de vitesse de cette cible.

L'AGP est donc un traitement de données qui se situe en aval du traitement du signal destiné à extraire les informations de base des signaux bruts obtenus depuis les bouées. L'AGP effectue donc une fusion des informations ainsi obtenues à partir de ce traitement des signaux bruts, ceux-ci pouvant provenir éventuellement d'autres capteurs que ceux du type acoustique, et même de capteurs extérieurs aux bouées. On obtient ainsi une estimation des différents paramètres de la cible (position, vitesse ...) ces estimations étant d'une précision supérieure à celles obtenues par les autres méthodes, en raison d'un accroissement du rapport signal/bruit global procuré par l'AGP.

Le principe général de cette technique de fusion d'observation consiste à effectuer les opérations suivantes :

■ segmentation du domaine des paramètres à estimer en cases élémentaires susceptibles de contenir la cible, ce qui correspond à un maillage de ce domaine ;
■ pour chaque case élémentaire, calcul du rapport de vraisemblance relatif à l'ensemble des observations effectuées ;
■ représentation de la carte de la vraisemblance globale de la présence d'une cible, et éventuellement seuillage de cette carte si l'on désire extraire un certain nombre de « contacts » pour chaque carte.

On utilisera dans la description suivante les termes définis ainsi :

■ zone de présence possible (ZPP), la zone géographique concernée par la constitution de l'AGP. qui est limitée par la portée des bouées. Cette zone sera définie par un carré de x km de côté centré approximativement soit sur le centre de gravité du polygone défini par les bouées, soit sur un point désigné manuellement par l'opérateur.
■ case géographique, l'élément de base du maillage de la ZPP.

Les dimensions de cette case, à priori carrée, seront voisines de celles de la cible recherchée, soit par exemple un carré de 50m x 50 m.

■ anneau de résolution en position, l'ensemble des cases géographiques (réparties suivant une ellipse dans le cas bistatique, un cercle dans le cas monostatique) pouvant contribuer par leurs positions à la constitution du signal observé à un instant donné.

■ zone des vitesses possibles (ZVP), le domaine des vitesses possibles pour la cible dans le plan (Vx, Vy). Pour un sous-marin ce domaine sera par exemple un carré de côté -25m/s, 0, +25m/s.

■ lieu d'ambiguïté en vitesse, le domaine des vecteurs possibles de vitesse pour une cible. Ce domaine est tel que ses vecteurs vitesses donnent un décalage Doppler théorique compatible avec le décalage Doppler mesuré. Ces lieux d'ambiguïté en vitesse, ou lieux iso-Doppler, sont des droites.

Bien que la technique optimale pour estimer les paramètres décrivant la cible consiste classiquement à traiter conjointement la position et la vitesse, l'invention propose d'effectuer un traitement permettant de déterminer successivement la position puis la vitesse. Bien que le rapport signal/bruit ainsi obtenu soit en principe moins bon que dans la méthode optimale, l'invention est particulièrement bien adaptée au cas d'un réseau multistatique pour permettre de lever les ambiguïtés de position et de vitesse. En outre, l'invention permet plus facilement de procéder à des vérifications et d'obtenir des résultats intermédiaires utilisables lors des stades intermédiaires du traitement.

Pour cela, l'invention propose un système de repérage acoustique par bouées sous-marines, dans lequel on disperse sur une zone maritime un ensemble de bouées actives qui émettent chacune un signal acoustique distinct dont les échos sur une cible sont reçus par au moins deux de ces bouées et sont retransmis par voie radioélectrique à une base de traitement qui extrait de ces signaux des informations de base et élabore une carte de type AGP donnant une représentation géographique de la position de la cible, annotée d'une estimation de sa vitesse, principalement caractérisé en ce que dans ce traitement on utilise un premier algorithme qui comprend les étapes suivantes :

-   maillage de la zone de présence possible dite ZPP en cases géographiques ;
-   création de zones elliptiques aveugles par suppression des signaux correspondant aux trajets directs entre bouées des ondes acoustiques ;
-   détermination de l'amplitude et de l'azimut observés, de l'azimut de la case considérée et de l'écart d'azimut entre les deux précédents :
-   calcul de l'indice de vraisemblance de la case ;
-   premier bouclage de ces deux étapes précédentes sur toutes les cases de ZPP ;
-   calcul d'un indice neutre;
-   deuxième bouclage de l'étape précédente sur toutes les cases de la ZPP ;
-   normalisation par cet indice neutre, puis ébasage;
-   troisième bouclage de l'étape précédente sur toutes les case de la ZPP ;
-   multiplication des indices de vraisemblance pour les diverses observations ;
-   quatrième bouclage de l'étape précédente sur toutes les cases de ZPP ;
-   cinquième bouclage à partir de l'étape de multiplication des - indices vers l'étape suivant celle de la création des zones elliptiques aveugles, sur l'ensemble des observations : et
-   seuillage des positions ainsi obtenues pour obtenir un nombre N de contact non contigus, formant la carte AGP des positions : N étant fixé par les capacités de traitement des algorithmes d'exploitation suivant celle-ci.

Selon une autre caractéristique, on utilise un deuxième algorithme qui suit le premier et qui comprend les étapes suivantes :

-   détermination des vitesses par rapport à chaque bouée à partir des détermination successives dans le temps des positions de cibles;
-   maillage de la zone des vitesses possibles en cases de vitesses dite ZVP;
-   calcul d'un indice de vraisemblance des vitesses;
-   multiplication des indices de vraisemblance pour les différentes observations;
-   premier bouclage de ces deux étapes précédentes sur l'ensemble des observations ;
-   deuxième bouclage de ces trois étapes précédentes sur toutes les case de la ZVP et ;
-   seuillage des vitesses ainsi obtenues et extraction du maximum pour déterminer les vitesses les plus vraisemblables, qui forment la carte ZVP des vitesses.

Selon une autre caractéristique, le premier algorithme est effectué sur un ensemble de canaux Doppler pour obtenir N images AGP $_{dop}$, et en ce que l'on utilise un troisième algorithme qui suit le premier et qui comprend les étapes suivantes :

-   maillage de la zone des vitesses possibles en cases de vitesses dite ZVP ;
    détermination de la vitesse théorique associée à la case considérée;
-   détermination d'un indice de vraisemblance de vitesse pour chaque canal Doppler et pour chaque bouée;
-   sommation de ces indices de vraisemblances;

- premier bouclage de ces deux étapes précédentes sur les différents canaux Doppler concernés ;
- deuxième bouclage de ces deux étapes précédentes sur les différents couples de bouées ;
- troisième bouclage de ces trois étapes précédentes sur toutes les cases de la ZVP ; et
- seuillage des vitesses ainsi obtenues et extraction du maximum pour déterminer les vitesses les plus vraisemblables, qui forment la carte ZVP des vitesses.

D'autres particularités et avantages de l'invention apparaîtront clairement dans la description suivante, présentée à titre d'exemple non limitatif en regard des figures annexées qui représentent :

- la figure 1, un organigramme du traitement permettant d'obtenir la carte AGP des positions de la cible ;
- la figure 2, un organigramme d'une première variante du traitement permettant d'obtenir l'image AGP des vitesses de la cible ; et
- la figure 3, un organigramme d'une deuxième variante de ce traitement.

L'invention propose d'utiliser successivement un premier algorithme, dit A1, pour estimer la position de la cible, et un deuxième algorithme dit A2' ou A2", pour estimer la vitesse de la cible dans une position déterminée.

Lorsque pour des bouées actives l'on utilise pour la détection le mode dit FM, qui consiste à utiliser des impulsions à large bande, où on ne peut pas mesurer l'effet Doppler, l'invention se réduira à l'algorithme A1.

Lorsque pour des bouées actives l'on utilise pour la détection le mode dit FP/CW, correspondant à une émission de fréquence pure, le traitement est composé de l'algorithme A1 suivi de l'un des deux algorithmes A2' ou A2".

On peut utiliser pour déclencher le traitement AGP, soit un mode manuel à la demande de l'opérateur, soit un mode automatique.

Les caractéristiques précises de ces deux modes, telles que le choix des bouées émettrices, la cadence d'émission, la géométrie des bouées ... sont sans influence sur les modalités de fusion de l'AGP et ne seront donc pas décrites précisément dans la suite de ce texte.

Les résultats du traitement permettent d'obtenir une image AGP courante. En effectuant une intégration de plusieurs images AGP courantes successives, par exemple 5 à 10 images, on peut alors obtenir une image « synthétique » qui est plus lisible car elle met en évidence les trajectoires des cibles intéressantes.

Les signaux faisant l'objet du traitement par AGP sont, plus particulièrement en mode FM où l'on cherche à déterminer de manière précise la position, les suivants :

- $s^2(t) = a(t)$ qui est le module carré moyenne du signal complexe démodulé reçu de manière omnidirectionnelle sur la bouée par le capteur omnidirectionnel porté par celle-ci ;
- $\varphi(t)$ qui est l'azimut apparent moyenne du champ sonore reçu par la bouée. On sait qu'en présence d'une seule cible et lorsque le rapport signal à bruit est fort, cet azimut correspond à la direction de la cible.

En plus de ces signaux, le traitement utilise un certain nombre de données, en particulier les coordonnées de positionnement des bouées, qui déterminent les distances horizontales entre celles-ci, la hauteur d'eau sur la zone concernée et l'immersion des bouées.

Le traitement en mode FP ou CW, qui permet de déterminer de manière précise la vitesse, utilise ces mêmes signaux et les signaux suivants :

- $s^2(v,t) = a(v,t)$ rassemblés dans un tableau qui donne pour les différents canaux de l'analyse Doppler l'évolution temporelle du module carré moyenné du signal complexe démodulé. Ces signaux sont reçus de manière omnidirectionnelle sur le capteur omnidirectionnel de la bouée.
- $\varphi(v,t)$ rassemblés dans un tableau qui donne pour les différents canaux de l'analyse Doppler l'évolution temporelle de l'azimut apparent moyenné du champ sonore reçu sur la bouée. Pour une cible unique et un rapport signal à bruit fort et en considérant un canal Doppler déterminé, ce signal correspond à l'azimut de la cible.

L'algorithme A1 permettant d'obtenir l'AGP des positions utilise pour chaque bouée réceptrice les signaux a(t) et $\varphi(t)$ qui ont été normalisés.

Ces signaux sont obtenus :

- en sortie du traitement FM, ce qui permet d'obtenir une image AGP des positions en mode FM ;
- en sortie de chaque canal Doppler en traitement CW, en fixant $v$ dans $a(v,t)$, et $\varphi(v, t)$, ce qui permet d'obtenir une image AGP des positions pour le canal Doppler $v$ considéré ;
- en sortie de traitement CW si l'on forme les signaux résumés $a(t) = \max\_en\_v[a(v, t)]$, $\varphi(t) = \varphi(Arg\_en\_v\_du\_max[a(v, t)], t)$, ce qui permet d'obtenir une image AGP des positions pour l'ensemble des canaux Doppler.

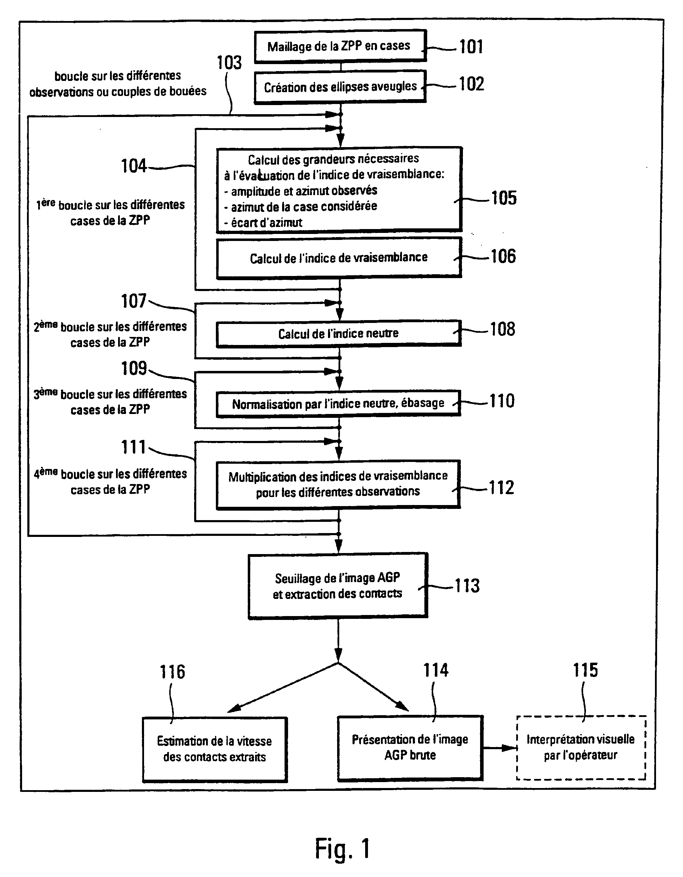

L'organigramme du traitement A1 est représenté sur la figure 1. On effectue tout d'abord en 101 un maillage de la ZPP en cases géographiques de dimensions adaptées à la résolution des observations et à la dimension de la cible (typiquement 50m sur 50m). La vraisemblance de chaque case est alors mise à zéro.

En 102, on supprime dans les signaux des bouées travaillant en bistatique des portions temporelles correspondant au trajet direct « bouée émettrice - boutées réceptrice » ce qui entraîne la création de zones elliptiques, dites aveugles, entourant chaque couple émetteur-récepteur.

Pour chacune des observations (c'est-à-dire chaque couple de bouées) on effectue la boucle 103 suivante, qui comprend quatre boucles internes :

Pour chaque case, une première boucle 104 sur les cases de la ZPP, qui permet d'obtenir un indice brut :

- on détermine en 105 la mesure (amplitude, azimut) relative à la case géométrique considérée, en effectuant une détermination de l'observation d'amplitude relative à la case, soit par « peak-picking » s'il y a plusieurs observations par case, soit par interpolation au centre de la case s'il y a au moins deux observations par case, puis une détermination de l'observation d'azimut associée à l'amplitude retenue, et une détermination de la précision de localisation angulaire qui dépend de l'amplitude observée de l'écho.

Cette précision est donnée par :

$$\sigma_{\Delta\varphi} = \sqrt{\frac{1}{rsb.N} + \sigma_{compas}^2} \approx \sqrt{\frac{1}{(a-1)N} + \sigma_{compas}^2} \qquad (1)$$

où

- a est l'amplitude moyennée observée
- N est le nombre d'échantillons élémentaires indépendants moyennés,
- $\sigma_{compas}$ est l'écart-type de la référence de cap fournie par le compas de la bouée (de l'ordre de quelques degrés),
- rsb : rapport signal à bruit, rsb = a-1 pour une normalisation en a'/m où m est la moyenne locale du signal omnidirectionnel non normalisé a'. a = Max (1,a).
- on détermine aussi en 105 l'écart d'azimut, $\Delta\varphi = \varphi_0 - \varphi(t)$ entre l'azimut $\varphi_o$ de la case considérée vue depuis la bouée réceptrice et l'azimut mesuré $\varphi(t)$ de la cible.

On procède ensuite en 106 au calcul de l'indice de vraisemblance de la case selon l'expression :

$$I = Gauss(m_{\Delta\varphi} = 0, \sigma_{\Delta\varphi}) \text{ avec } \sigma_{\Delta\varphi} = max (\pi, \sigma_{\Delta\varphi})$$

$$(3)$$

dans laquelle $m_{\Delta\varphi} = 0$ exprime que la moyenne est nulle.

Une deuxième boucle 107 sur l'ensemble des cases de la ZPP permet de calculer en 108 l'indice neutre selon l'expression :

$$I_{neutre} = moyenne\_de\_I + 1{,}5.écart\text{-}type\_de\_I \qquad (4)$$

($k_1$= 1,5 est un paramètre ajustable entre 0,5 et 3)

Une troisième boucle 109 sur l'ensemble des cases de la ZPP permet de normaliser en 110 par l'indice neutre, avec affectation de l'indice neutre aux cases non adressées par le signal, et enfin d'effectuer un ébasage selon la formule :

$$\text{Minimum\_indice} = \text{Maximum\_indice}/100 = 1/(\sigma_{compas}\sqrt{2\pi})/(I_{neutre} \cdot 100) \qquad (5)$$

($k_2 = 100$ est un paramètre ajustable en 100 et 300)

Une quatrième boucle 111 sur l'ensemble des cases de la ZPP permet de multiplier en 112 (pour une même case), les différents indices de vraisemblance supposés associés à des observations indépendantes de différentes bouées, ceci de façon à constituer la carte géographique de la vraisemblance AGP des positions.

On effectue ensuite en 113 un seuillage de la carte AGP des positions en ne retenant que les N cases d'indice de vraisemblance maximum, N étant fixé par les capacités de traitement des algorithmes situés en aval de cet algorithme A1 (formation des cartes AGP des vitesses, pistage ...). Si plusieurs cases sont contiguës, on les fusionne en ne retenant que la case de vraisemblance maximum. De façon à maintenir constant le nombre de contacts extraits par réalisation d'AGP et après éventuelle fusion de certains contacts, on extrait des contacts supplémentaires de niveaux plus faibles que l'on fusionne si il y a à nouveau contiguïté, et ainsi de suite jusqu'à extraction de N contacts non contigus.

La sortie de l'algorithme s'effectue en 114 par une présentation de l'image AGP brute, qui peut être interprétée visuellement en 115 par un opérateur, ou en 116 par une estimation de la vitesse des contacts extraits, de préférence avec l'un des algorithmes A2.

L'algorithme AGP A2 qui permet d'estimer les vitesses et qui peut prendre les deux formes A2' et A2", s'applique en mode CW et vise à donner une estimation du vecteur vitesse de la cible. Il suppose qu'une image AGP des positions a été obtenue au préalable. Il s'applique pour une position possible de la cible et donc en particulier pour les N positions extraites par l'algorithme A1 de formation de l'image AGP des positions.

Pour l'une de ces positions, on considère, selon un principe similaire à celui de l'AGP des positions, une ZVP des vitesses (typiquement une zone telle que $V_x = \pm$ 25 m/s et $V_y = \pm$ 25 m/s). On calcule, pour chaque bouée, un indice de vraisemblance de la vitesse en chaque case de la ZVP. L'ensemble des cases d'indice élevé dessine alors le lieu d'ambiguïté en vitesse (droite iso-Doppler) pour la bouée considérée. On accumule ensuite les indices associés à chacune des observations et la vitesse de la cible est alors définie comme étant celle de la case d'indice maximale. En règle générale, cette case est aussi le point d'intersection des différents lieux d'ambiguïté en vitesse.

L'invention propose deux variantes A2' et A2" de cet algorithme, qui diffèrent selon la façon de fusionner les informations issues des différents canaux Doppler du traitement CW.

L'algorithme A2' est le plus simple et le plus rapide des deux algorithmes de type A2. Il utilise un « résumé » des signaux issus du traitement CW. Les signaux résumés sont constitués de trois courbes, fonction du temps, formées à partir des images Doppler-distance, azimut et amplitude, selon la procédure correspondant aux formules :

$$a(t) = \text{Max\_en\_v}[a(v,t)] \qquad (6)$$

$$v(t) = \text{Arg\_en\_v\_du\_max}[a(v,t)] \qquad (7)$$

$$\varphi(t) = \varphi(\text{Arg\_en\_v\_du\_max}[a(v,t)],t) \qquad (8)$$

v(t) est l'écart de fréquence Doppler entre la fréquence porteuse émise et la fréquence reçue par la bouée.

On pourra aussi, pour avoir plus de précision sur la détermination de Max_en_v[a(v,t)], interpoler paraboliquement entre les valeurs échantillonnées au pas $\Delta v = 1/T$ de a (v,t) (T longueur de l'impulsion CW utilisée).

Les signaux a(t) et $\varphi(t)$ sont utilisés dans un premier temps pour former une image AGP des positions selon l'algorithme A1. Pour les N contacts extraits de cette image AGP, on forme ensuite N images AGP des vitesses.

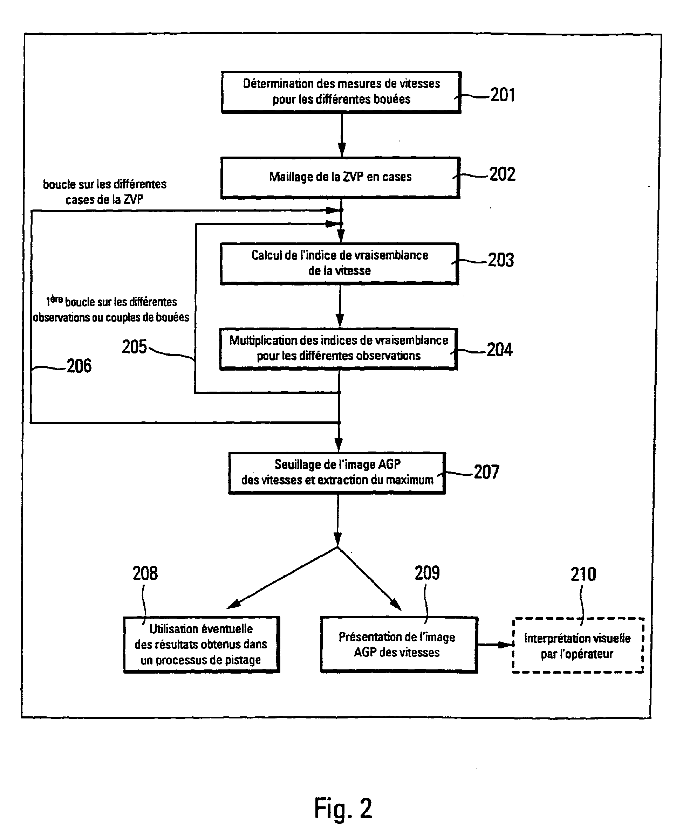

L'organigramme de l'algorithme A2' est représenté sur la figure 2.

Le contact considéré fournit par sa position les temps d'arrivée $\{t_1, ..., t_i, ... t_k\}$ associés aux k bouées du réseau, ce qui permet de calculer en 201 k estimations de la somme algébrique des projections du vecteur vitesse selon les axes « bouée émettrice-cible » $V_e$ et « cible-bouée réceptrice " $V_r$, somme algébrique des vitesses déduites des $v_i(t_i)$ :

$$\left\{ (v_e + v_r)_1 = c \cdot v_1(t_1)/v_0, ...., (v_e + v_r)_i = c \cdot v_i(t_i)/v_0, ...., (v_e + v_r)_k = c \cdot v_k(t_k)/v_0 \right\}$$

où $\nu_0$ est la fréquence porteuse émise par la bouée émettrice.

On procède ensuite en 202 au maillage de la ZVP.

Pour déterminer la vitesse de la cible, on effectue un calcul d'un indice de vraisemblance sur chacune de ces projections du vecteur vitesse.

Pour cela, on suppose que la densité de probabilité de la mesure $(v_e + v_r)_i$ est du type loi Gaussienne :

$$p_V(v_e + v_r) = \frac{1}{\sigma_V.\sqrt{2\pi}}.e^{-\frac{(v_e + v_r - v_{case})^2}{2.\sigma_V^2}}$$

(9)

où :

- $v_{case}$ est la somme algébrique des vitesses que l'on devrait mesurer sur la bouée considérée si la cible possédait le vecteur vitesse associé à la case considérée de la ZVP,
- l'écart-type de l'estimation de la vitesse est supposé suivre une loi de type Woodward :

$$\sigma_V = Min\left(\frac{c.\sqrt{3}}{\nu_0.2\pi.T.\sqrt{rsb}}, V_{max}\right) \qquad (10)$$

avec :

- T durée de l'impulsion émise en mode CW,
- rsb le rapport signal à bruit qui sera estimé par rsb=(a-1) avec a = Max (1,a),
- $V_{max}$ la demi-amplitude du domaine de vitesse exploré.

On calcule alors en 203 un indice de vraisemblance de vitesse donné par :

$$I = p_V((v_e + v_r)_i) \qquad (11)$$

On effectue ensuite en 203 une multiplication (ou une addition des logarithmes) des indices de vraisemblance pour moyenner sur les différentes observations des bouées, en effectuant une première boucle 205.

$$I = \sum_{i=1}^{k\_bou\acute{e}e} \log(p_V[(v_e + v_r)_i]) \qquad (12)$$

On effectue après une deuxième boucle 206 sur les différentes cases de la ZVP.

L'image AGP ainsi obtenue est seuillée en 207 pour extraire le maximum qui détermine le vecteur vitesse le plus vraisemblable pour le contact considéré.

La sortie de l'algorithme s'effectue en 209 par une présentation de l'image AGP des vitesses qui peut être interprétée usuellement en 210 par un opérateur, ou en 208 pour alimenter un éventuel processus de pistage.

L'algorithme A2" est le plus performant mais aussi le plus complexe des deux algorithmes de type A2. Il utilise l'ensemble des signaux issus du traitement CW. Il suppose que l'algorithme A1 ait été appliqué à l'ensemble des canaux Doppler puis que les résultats issus des AGP des positions dans chaque canal Doppler aient été fusionnés de façon à former une carte globale des positions dont sont extraites des positions ou contacts possibles de la cible, pour chacun desquels est ensuite formée une image AGP des vitesses.

Le traitement CW/Doppler de la bouée active peut se résumer à une analyse spectrale glissante dans le temps. Les signaux en sortie du traitement de signal CW sont constitués pour chacun des canaux Doppler par une estimation de la puissance instantanée reçue et une estimation de l'azimut du signal instantané incident :

signaux obtenus pour la bouée b et le canal Doppler

$$f : \{a(t), \varphi(t)\}_{\text{bouée b, canal f}} \tag{13}$$

L'algorithme de fusion entre plusieurs canaux Doppler s'appuie sur la constatation que l'analyse spectrale suivant différents canaux Doppler a pour but d'accroître le rapport signal à bruit dans le canal contenant la cible. L'algorithme A"2 commence donc par une fusion entre bouées dans un même canal (algorithme A1) puis effectue une détection dans la carte $AGP_f$ obtenue pour le canal Doppler considéré, et enfin effectue la fusion des résultats de détection des différents canaux Doppler.

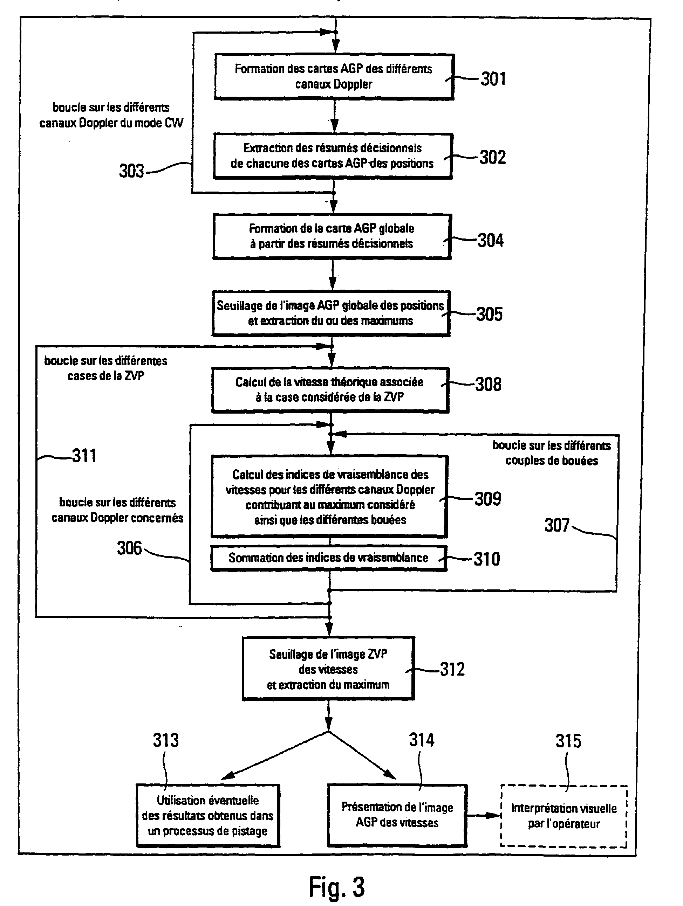

L'algorithme A2" se déroule en trois étapes qui sont représentées sur la figure 3.

Une première étape consiste à former les cartes AGP de chaque canal Doppler et à extraire des résumés décisionnels.

Pour un même canal Doppler et l'ensemble des bouées, on forme en 301 l'image AGP associée à ce canal selon la méthode décrite dans le cas FM/impulsionnel (algorithme A1). Dans ces images AGP propres à chaque canaux Doppler les cases géographiques peuvent être grandes puisque la résolution de l'impulsion est faible. Une valeur typique est de 100m.

L'image $AGP_f$, dans le canal Doppler considéré, étant obtenue, on forme en 302 un « résumé décisionnel » de cette image. C'est ce résumé décisionnel qui fera l'objet de la fusion entre l'ensemble des canaux Doppler observés. Ce résumé décisionnel doit être constitué au minimum des données suivantes :

- le niveau moyen de l'image $AGP_f$,
- l'écart-type de l'image $AGP_f$,
- le niveau du maximum de l'image $AGP_f$,
- la position en x,y du maximum de l'image $AGP_f$,
- les paramètres petit axe, grand axe, direction du grand axe de l'ellipse d'inertie du domaine entourant le maximum et de niveau supérieur ou égal à une valeur seuil,
- les contributions relatives $\{..., a_i, ...\}$ de chacune des bouées au maximum de l'image $AGP_f$.

Le résumé décisionnel a pour effet de réduire l'image $AGP_f$ à un domaine elliptique, domaine auquel est attaché un indice de présence de cible.

) La valeur seuil utilisée pour la définition du domaine du maximum, est donnée par la procédure suivante :

$$rsb\_du\_max=(niveau\_du\_max - niveau\_moyen)/écart\_type\_du\_niveau$$

$$val\_seuil=(niveau\_du\_max \ niveau\_moyen).(1k_3/rsb\_du\_max^2)+niveau\_moyen$$

$$k_3 = 2$$

Cette procédure fait l'hypothèse que le rapport signal à bruit du maximum est mesurable à partir de l'image et que le pic du maximum suit une allure parabolique dont la détermination de la position obéit à une loi de type Woodward. Le paramètre $k_3$ peut être éventuellement ajusté en le faisant varier dans l'intervalle [0,5 ; 4].

Cette procédure est effectuée pour tous les canaux Doppler à l'aide d'une boucle 303.

Dans une deuxième étape, on fusionne les cartes AGP des différents canaux Doppler.

Cette fusion s'effectue à partir de l'ensemble des « résumés décisionnels » par sommation en 304 des cartes réduites à un domaine elliptique. Le résultat de cette sommation aboutit à une carte $AGP_{gp}$ globale des positions. Sur cette carte $AGP_{gp}$, on détermine la position des N (N=4 par exemple) premiers maximums non corrélés par seuillage et extraction du ou des maximums en 305. C'est pour ces N premiers maximums non corrélés que l'on effectuera la fusion des informations Doppler pour déterminer la direction et le module du vecteur vitesse de la cible. Cette dernière fusion aboutira alors à N images $AGP_{dop}$.

Dans une troisième étape, on forme les cartes ou images AGP des vitesses.

Ces cartes $AGP_{dop}$ des vitesses sont uniquement formées pour les N maximums retenus dans la carte $AGP_{gp}$ des positions. La méthode de formation d'une carte $AGP_{dop}$ est la suivante :

- détermination dans le fichier des résumés décisionnels des $AGP_f$ ayant participé à la valeur du maximum considéré, des grandeurs suivantes :

  a les contributions relatives des différents canaux Doppler ayant donné le maximum :

  $$C_f, 0 < C_f \leq 1, Cf_0 = \frac{RSBf_0}{\sum\limits_{f} RSBf}$$ où f décrit l'ensemble des canaux doppler contribuant au maximum considéré.

  ■ dans chaque canal la participation relative de chaque bouée : $C_b, 0 \leq C_b \leq 1$. $C_{b0} = \frac{I_{b0}}{\sum\limits_{b} I_b}$ où b décrit l'ensemble des bouées

  du réseau et où $I_{b0}$ est l'indice de vraisemblance, au sens de l'algorithme $A_1$, du maximum considéré,

- maillage de la carte AGP des vitesses (par exemple : = 25 m/s, largeur des cases 0,25 m/s)
- pour chaque case de la carte AGP des vitesses :

  ■ pour chacun des canaux Doppler (précédemment identifiés) contribuants par une boucle 306 et pour chacune des bouées contribuantes, par une boucle 307 :

  • calcul en 308 de la somme algébrique des projections du vecteur vitesse de la case selon les axes « bouées émettrice-cible » et « cible-bouée réceptrice » ;
  • calcul en 309 d'un indice de vraisemblance Doppler dépendant de l'écart entre la somme des vitesses projetées et la vitesse associée au canal Doppler considéré. Cet indice sera de la forme :

  $$I = C_f.C_b.F[(v_e+v_r)\text{théorique de la case} - (v_e+v_r)\text{canal} -f]$$

  $$(16)$$

  Avec $(v_e + v_r)$ canal -f = cf/f_0, où $f_0$ est la fréquence porteuse émise par la bouée émettrice.

Où F est la fonction décrivant la fenêtre d'analyse Doppler du traitement CW mis en oeuvre. Une estimation grossière de cette fenêtre est un rectangle dont la largeur est celle du canal spectral Doppler.

$C_f.C_b$ représente une estimation de la composante spectrale, à la fréquence f, du spectre Doppler de la cible, vu depuis la bouée b.

Ce processus fait apparaître sur l'image AGP des vitesses une bande rectiligne correspondant au lieu d'ambiguïté Doppler de la mesure donnée par la bouée considérée et pour le canal Doppler considéré.

  ■ sommation en 310 des indices de vraisemblance associés à chaque canal et à chaque bouée. Ces opérations sont répétées sur toutes les cases de la ZVP par une boucle 311. On aboutit alors à une intersection de bandes d'amplitudes variables. Si une cible est associée au maximum considéré de l'image $AGP_{gp}$ des positions, ces bandes se coupent au voisinage d'un même point, définissant ainsi le vecteur vitesse de la cible.

On a ensuite les opérations de seuillage 312 et d'utilisation des résultats 313 à 315 identiques à celles 207 à 210 de la figure 2.

A titre de variante de réalisation, l'invention propose d'intégrer plusieurs images AGP des positions, pour permettre un pistage visuel de la cible.

Un exemple d'un algorithme utilisable à cet effet est le suivant :

- dans une première étape, on seuille l'image AGP courante :

le seuil de la première image étant défini par l'opérateur, pour les images suivantes on travaille à nombre de contacts constants par seuillage adaptatif, ce dernier évoluant en fonction du nombre de contacts retenus sur l'image précédente selon la formule :

$$S_{i+1} = S_i + \frac{1}{\tau}\left( \frac{Nd_i}{Nc} - \frac{Nc}{Nd_i} \right) \qquad (17)$$

où $\tau$ est une constante de temps à ajuster
Nc est le nombre désiré de contacts par image
Nd le nombre de contacts obtenus/détectés dans l'image i

- dans une deuxième étape, on intègre sur une même image les contacts extraits sur les images AGP successives précédentes.

**Revendications**

1. Système de repérage acoustique par bouées sous-marines, dans lequel on disperse sur une zone maritime un ensemble de bouées actives qui émettent chacune un signal acoustique distinct dont les échos sur une cible sont reçus par au moins deux de ces bouées et sont retransmis par voie radioélectrique à une base de traitement qui extrait de ces signaux des informations de base et élabore une carte de type AGP donnant une représentation géographique de la position de la cible, annotée d'une estimation de sa vitesse, **caractérisé en ce que** dans ce traitement on utilise un premier algorithme qui comprend les étapes suivantes :

   - Maillage de la zone de présence possible dite ZPP en cases géographiques (101);
   - Création de zones elliptiques aveugles par suppression des signaux correspondant aux trajets directs entre bouées des ondes acoustiques (102) ;
   - Détermination de l'amplitude et de l'azimut observés, de l'azimut de la case considérée vue depuis la bouée réceptrice et de l'écart entre ces deux azimuts (105);
   - Calcul de l'indice de vraisemblance de la case (106) ;
   - Premier bouclage (104) de ces deux étapes précédentes sur toutes les cases de ZPP ;
   - Calcul d'un indice neutre (106) ;
   - Deuxième bouclage (107) de l'étape précédente sur toutes les cases de la ZPP ;
   - Normalisation par cet indice neutre, puis ébasage (110) ;
   - Troisième bouclage (109) de l'étape précédente sur toutes les case de la ZPP ;
   - Multiplication des indices de vraisemblance pour les diverses observations (112) ;
   - Quatrième bouclage de l'étape précédente sur toutes les cases de ZPP ;
   - Cinquième bouclage (103) à partir de l'étape de multiplication des indices (112) vers l'étape suivant celle de la création des zones elliptiques aveugles (105), sur l'ensemble des observations ; et
   - Seuillage (13) des positions ainsi obtenues pour obtenir un nombre N de contact non contigus, formant la carte AGP des positions ; N étant fixé par les capacités de traitement des algorithmes d'exploitation suivant celle-ci.

2. Système selon la revendication 1, **caractérisé en ce que** l'on utilise un deuxième algorithme qui suit le premier et qui comprend les étapes suivantes :

   - détermination des vitesses par rapport à chaque bouée à partir des détermination successives dans le temps des positions de cibles (201) ;
   - maillage de la zone des vitesses possibles en cases de vitesses dite ZVP (202) ;
   - calcul d'un indice de vraisemblance des vitesses (203) ;
   - multiplication des indices de vraisemblance pour les différentes observations (204) ;
   - premier bouclage (205) de ces deux étapes précédentes sur l'ensemble des observations ;
   - deuxième bouclage (206) de ces trois étapes précédentes sur toutes les case de la ZVP et ;
   - seuillage (207) des vitesses ainsi obtenues et extraction du maximum pour déterminer les vitesses les plus vraisemblables, qui forment la carte ZVP des vitesses.

**3.** Système selon la revendication 1, **caractérisé en ce que** le premier algorithme est effectué sur un ensemble de canaux Doppler pour obtenir N images AGP $_{dop}$ (301-305), et **en ce que** l'on utilise un troisième algorithme qui suit le premier et qui comprend les étapes suivantes :

- maillage de la zone des vitesses possibles en cases de vitesses dite ZVP ;
- détermination de la vitesse théorique associée à la case considérée (308) ;
- détermination d'un indice de vraisemblance de vitesse pour chaque canal Doppler et pour chaque bouée (309) ;
- sommation de ces indices de vraisemblances (31) ;
- premier bouclage (306) de ces deux étapes précédentes sur les différents canaux Doppler concernés ;
- deuxième bouclage (307) de ces deux étapes précédentes sur les différents couples de bouées ;
- troisième bouclage (311) de ces trois étapes précédentes sur toutes les cases de la ZVP ; et
- seuillage (312) des vitesses ainsi obtenues et extraction du maximum pour déterminer les vitesses les plus vraisemblables, qui forment la carte ZVP des vitesses.

**Claims**

**1.** Acoustic ranging system using submarine buoys, wherein an array of active buoys is dispersed over a maritime zone each transmitting a distinct acoustic signal which echoes from a target, said echoes being received by at least two of these buoys and relayed by radioelectric means to a processing unit which extracts the basic information from these signals and maps out an AGP type of chart providing a geographical representation of the position of the target, annotated with an estimate of its speed, **characterised in that** during processing, a first algorithm is used which comprises the following steps:

- gridding the zone of possible presence, referred to as ZPP, into geographical cells (101);
- creating blind elliptic zones by suppressing the signals corresponding to the direct paths of the acoustic waves (102) between buoys;
- determining the observed amplitude and azimuth, the azimuth of the cell under consideration viewed from the receiving buoy, and the deviation between these two azimuths (105);
- calculating the likelihood index of the cell (106);
- first looping (104) of these two preceding steps over all ZPP cells;
- calculating a neutral index (106);
- second looping (107) of the preceding step over all ZPP cells;
- normalising using this neutral index, then base lining (110);
- third looping (109) of the preceding step over all ZPP cells;
- multiplying the likelihood indexes for the various observations (112);
- fourth looping of the preceding step over all ZPP cells;
- fifth looping (103) starting from the indexes multiplication step (112) towards the step following that of creating the blind elliptic zones (105), over all observations; and
- thresholding (13) of the positions thus obtained in order to obtain a number N of non-contiguous contacts, forming the AGP chart of the positions; N being fixed by the processing capacities of the operating algorithms following the same.

**2.** System according to claim 1, **characterised in that** a second algorithm is used which follows the first and which comprises the following steps:

- determining the speeds in relation to each buoy from the successive determination of the positions of the targets (201) over time;
- gridding the zone of possible speed, referred to as ZVP (202), into speed cells;
- calculating a speed likelihood index (203);
- multiplying the likelihood indexes for the various observations (204);
- first looping (205) of these two preceding steps over all observations;
- second looping (206) of these three preceding steps over all ZVP cells; and
- thresholding (207) of the speeds thus obtained and extraction of the maximum in order to determine the most likely speeds, which form a ZVP chart of speeds.

3. System according to claim 1, **characterised in that** the first algorithm is performed over a set of Doppler channels in order to obtain N AGP $_{do}$p images (301-305), and **in that** a third algorithm is used which follows the first and which comprises the following steps:

  - gridding the zone of probable speed, referred to as ZVP, into speed cells;
  - determining a theoretical speed associated with the cell under consideration (308);
  - determining a speed likelihood index for each Doppler channel and for each buoy (309);
  - adding up of these likelihood indexes (31);
  - first looping (306) of these two preceding steps over the various relevant Doppler channels;
  - second looping (307) of these two preceding steps over the various pairs of buoys;
  - third looping (311) of these three preceding steps over all ZVP cells; and
  - thresholding (312) of the speeds thus obtained and extraction of the maximum in order to determine the most likely speeds, which form a ZVP chart of speeds.

**Patentansprüche**

1. Schallortungssystem unter Verwendung von Unterwasserbojen, wobei ein Satz von aktiven Bojen über eine maritime Zone verteilt ist, die jeweils ein getrenntes akustisches Signal aussenden, deren Echos von einem Ziel von wenigstens zwei dieser Bojen empfangen und auf radioelektrischem Weg zu einer Verarbeitungseinheit gesendet werden, die die Grundinformationen aus diesen Signalen extrahiert und eine AGP-Karte erstellt, die eine geografische Darstellung der Position des Ziels mit einer Schätzung seiner Geschwindigkeit annotiert gibt, **dadurch gekennzeichnet, dass** bei dieser Verarbeitung ein erster Algorithmus verwendet wird, der die folgenden Schritte beinhaltet:

  - Rasterisieren der Zone mit möglichen Anwesenheiten, ZPP genannt, in geografische Zellen;
  - Erzeugen blinder elliptischer Zonen durch Unterdrücken der Signale, die den direkten Pfaden der Schallwellen (102) zwischen Bojen entsprechen;
  - Ermitteln der/des beobachteten Amplitude und Azimuth, des Azimuth der von der Empfangsboje gesehenen fraglichen Zelle und der Abweichung zwischen diesen beiden Azimuthen (105);
  - Berechnen des Wahrscheinlichkeitsindex der Zelle (106);
  - erstes Bilden einer Schleife (104) mit diesen zwei vorherigen Schritten über alle ZPP-Zellen;
  - Berechnen eines neutralen Index (106);
  - zweites Bilden einer Schleife (107) mit diesem vorherigen Schritt über alle Zellen der ZPP;
  - Normalisieren mit diesem neutralen Index, dann Basisjustierung (110);
  - drittes Bilden einer Schleife (109) mit dem vorherigen Schritt über alle Zellen der ZPP;
  - Multiplizieren der Wahrscheinlichkeitsindexe für die diversen Beobachtungen (112);
  - viertes Bilden einer Schleife mit dem vorherigen Schritt über alle ZPP-Zellen;
  - fünftes Bilden einer Schleife (103) vom Indexmultiplikationsschritt (112) bis zu dem Schritt, der auf den der Erzeugung von blinden elliptischen Zonen (105) folgt, über den Satz von Beobachtungen; und
  - Bilden eines Schwellenwertes (13) der so erhaltenen Positionen, um eine Anzahl N von nicht aneinander grenzenden Kontakten zu erhalten, die die AGP-Karte der Positionen bilden; wobei N durch die Verarbeitungskapazitäten der darauf folgenden Betriebsalgorithmen festgelegt wird.

2. System nach Anspruch 1, **dadurch gekennzeichnet, dass** ein zweiter Algorithmus verwendet wird, der auf den ersten folgt und die folgenden Schritte beinhaltet:

  - Ermitteln der Geschwindigkeiten in Bezug auf jede Boje von den aufeinander folgenden Ermittlungen der Positionen der Ziele (201) über die Zeit;
  - Rasterisieren der Zone der möglichen Geschwindigkeiten, mit ZVP bezeichnet, in Geschwindigkeitszellen (202);
  - Berechnen eines Geschwindigkeitswahrscheinlichkeitsindexes (203);
  - Multiplizieren der Wahrscheinlichkeitsindexe für die verschiedenen Beobachtungen (204);
  - erstes Bilden einer Schleife (205) mit diesen zwei vorherigen Schritten über den Satz von Beobachtungen;
  - zweites Bilden einer Schleife (206) mit diesen drei vorherigen Schritten über alle Zellen der ZVP; und
  - Bilden eines Schwellenwertes (207) der so erhaltenen Geschwindigkeiten und Extrahieren des Maximums, um die wahrscheinlichsten Geschwindigkeiten zu ermitteln, die die ZVP-Karte von Geschwindigkeiten bilden.

3. System nach Anspruch 1, **dadurch gekennzeichnet, dass** der erste Algorithmus an einem Satz von Dopplerkanälen durchgeführt wird, um N AGP$_{dop}$ Bilder (301-305) zu erhalten, und **dadurch**, dass ein dritter Algorithmus verwendet wird, der auf den ersten folgt und die folgenden Schritte beinhaltet:

- Rasterisieren der Zone der möglichen Geschwindigkeit, mit ZVP bezeichnet, in Geschwindigkeitszellen;
- Ermitteln der theoretischen Geschwindigkeit in Verbindung mit der betrachteten Zelle (308);
- Ermitteln eines Geschwindigkeitswahrscheinlichkeitsindexes für jeden Dopplerkanal und für jede Boje (309);
- Addieren dieser Wahrscheinlichkeitsindexe (31);
- erstes Bilden einer Schleife (306) mit diesen zwei vorherigen Schritten über die verschiedenen betroffenen Dopplerkanäle;
- zweites Bilden einer Schleife (307) mit diesen zwei vorherigen Schritten über die verschiedenen Bojenpaare;
- drittes Bilden einer Schleife (311) mit diesen drei vorherigen Schritten über alle Zellen der ZVP; und
- Bilden eines Schwellenwertes (312) der so erhaltenen Geschwindigkeiten und Extrahieren des Maximums, um die wahrscheinlichsten Geschwindigkeiten zu ermitteln, die die ZVP-Karte von Geschwindigkeiten bilden.

Maillage de la ZPP en cases — 101

boucle sur les différentes
observations ou couples de bouées    103

Création des ellipses aveugles — 102

104

1ère boucle sur les différentes
cases de la ZPP

Calcul des grandeurs nécessaires
à l'évaluation de l'indice de vraisemblance:
- amplitude et azimut observés
- azimut de la case considérée
- écart d'azimut — 105

Calcul de l'indice de vraisemblance — 106

107

2ème boucle sur les différentes
cases de la ZPP

Calcul de l'indice neutre — 108

109

3ème boucle sur les différentes
cases de la ZPP

Normalisation par l'indice neutre, ébasage — 110

111

4ème boucle sur les différentes
cases de la ZPP

Multiplication des indices de vraisemblance
pour les différentes observations — 112

Seuillage de l'image AGP
et extraction des contacts — 113

116

Estimation de la vitesse
des contacts extraits

114

Présentation de l'image
AGP brute

115

Interprétation visuelle
par l'opérateur

Fig. 1

Fig. 2

**Fig. 3**

- boucle sur les différents canaux Doppler du mode CW
- 303
- Formation des cartes AGP des différents canaux Doppler — 301
- Extraction des résumés décisionnels de chacune des cartes AGP des positions — 302
- Formation de la carte AGP globale à partir des résumés décisionnels — 304
- Seuillage de l'image AGP globale des positions et extraction du ou des maximums — 305
- boucle sur les différentes cases de la ZVP
- Calcul de la vitesse théorique associée à la case considérée de la ZVP — 308
- 311
- boucle sur les différents canaux Doppler concernés
- boucle sur les différents couples de bouées
- Calcul des indices de vraisemblance des vitesses pour les différents canaux Doppler contribuant au maximum considéré ainsi que les différentes bouées — 309
- 307
- 306 — Sommation des indices de vraisemblance — 310
- Seuillage de l'image ZVP des vitesses et extraction du maximum — 312
- 313 — Utilisation éventuelle des résultats obtenus dans un processus de pistage
- 314 — Présentation de l'image AGP des vitesses
- 315 — Interprétation visuelle par l'opérateur

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9203005 A
- WO 2688595 A
- US 3444508 A